# EUROPEAN PATENT SPECIFICATION

(11) **EP 2 597 299 B1**
(45) Date of publication and mention of the grant of the patent: **22.04.2020**
(21) Application number: 11809772.4
(22) Date of filing: 03.01.2011
(51) Int. Cl.: F03B 13/18, F03B 13/22, F03B 13/14

(54) **WAVE POWER GENERATION APPARATUS**
VORRICHTUNG ZUR WELLENENERGIE-ERZEUGUNG
APPAREIL DE PRODUCTION D'ÉNERGIE HOULOMOTRICE

(30) Priority: 21.07.2010 KR 20100070519
(43) Date of publication of application: 29.05.2013
(73) Proprietor: Samsung Heavy Industries Co., Ltd., Seoul 137-955 (KR)
(72) Inventor: YUCK, Rae Hyoung, Daejeon 305-380 (KR); KIM, Se Eun, Daejeon 305-380 (KR)
(74) Representative: FRKelly
(86) International application number: PCT/KR2011/000009
(87) International publication number: WO 2012/011645

(56) References cited:
- WO-A1-2010/040894
- GB-A- 2 425 154
- JP-A- 2000 245 133
- KR-A- 20090 122 827
- US-A- 3 928 967
- US-A1- 2005 167 988
- US-A1- 2009 160 191
- US-A1- 2010 140 944

## Description

### [Technical Field]

The present invention relates to a wave power generation apparatus for generating electricity.

### [Background Art]

General power generation methods include hydroelectric power generation using water power, thermal power generation using fossil fuel and nuclear power generation using nuclear power.

These power generation methods require a large-scale power generation facility and an enormous amount of energy to run the power generation facility but have limited choices of installation sites.

Particularly, the thermal power generation relies heavily on the fossil fuel such as petroleum, coal and the like, causing the problem of exhaustion of natural resources, and thus may not be used perpetually. Moreover, it is not environmentally friendly due to concerns for atmospheric pollution and radiation leak.

As more attentions are paid to the problems of exhaustion of fossil fuel and contamination of environment, there has been more demand recently for alternative energy that can generate electricity directly using natural energy and does not require installation of a large-scale generation facility.

Having been developed using this alternative energy include power generation apparatuses that are environmentally friendly using natural energy, such as solar heat, tidal power, wave power, wind power and water power, and can utilize the energy sources perpetually.

An example of such a power generation apparatus, the wave power generation apparatus uses the translational and rotational motions of a floating body to convert kinetic energy to generate electrical energy.

The conventional wave power generation apparatus has attempted to transfer as much wave energy as possible through the motions of the floating body in order to increase the power generation efficiency, and accordingly various forms of floating bodies have been suggested based on the method of power transfer.

However, since the conventional wave power generation apparatus directly uses the wave energy itself, the power generation efficiency can be inevitably lowered according to the state of the sea, and particularly, when the sea is calm, the power generation efficiency can be dramatically lowered. Moreover, if the conventional wave power generation apparatus is installed where the wave energy is big in order to increase the power generation efficiency, the power generation apparatus itself is exposed to the risk of damage. As such, the conventional wave power generation apparatus has limited areas where power can be generated and has been incapable of producing stable electricity without interruption, and thus the substantial efficiency of electricity generation has been low, also lowering its economic feasibility and practicality.

GB 2 425 154 relates to a turbine for generating energy from water waves. The turbine comprises an anchor fixing the position of the turbine, a support that is coupled to the anchor and to a turbine blade, the turbine blade being rotatably mounted about an axis of rotation on the support and an electrical generator coupled to the blade. The turbine blade can be cylindrical in shape and designed to operate under the surface of the water by moving with the motion of the waves to generate electricity. A coupling between the support and the anchor may allow the support to be adjusted so as to vary the depth of the turbine blade.

WO2010040894 relates to a wave power plant, comprising two frame elements with a limited movement relative to each other. Frame elements are interconnected by a crankshaft. The first frame element is vertical and has its bot-tom portion provided with a heavy horizontal flange or some other form part, which opposes the up-and-down movement, and its top portion is flat and perpendicular to an incoming wave direction (A). The second frame element is floating in a horizontal position and provided with a flange or fin or some other form part, which is present at a distance from the crankshaft and which is crosswise to the incoming direction (A) of waves. The crankshaft's rotary motion is synchronic with a substantial wave period, whereby the power plant operates in a resonating manner.

### [Disclosure]

### [Technical Problem]

The present invention provides a wave power generation apparatus which improves power generation efficiency by allowing a floating body to motion pursuant to wave characteristics of the sea and increasing kinetic energy resulted from resonance.

### [Technical Solution]

The present invention is defined by claim 1.

The wave power generation apparatus can also include an accelerator/decelerator installed in between the pivot axle of the upper structure and the driving axle of the generation part.

The center of gravity of the upper structure can be positioned to be lower than a center of buoyancy of the upper structure.

A lateral side of the upper structure can be formed in the shape of a water drop in which a width thereof is increased toward a bottom thereof and is decreased again below a pivot axle of the upper structure.

The gravity center movement part can include: a rotation axle vertically installed in the upper structure; a weight installed on one side of the rotation axle; and a driving part configured to elevate and lower the weight by rotating the rotation axle.

A gravity center movement part can include: a rod installed vertically in the upper structure and having a gear part formed on one side thereof; a weight installed on the other side of the rod; and a turning gear engaged with the gear part of the rod and configured to move the rod so that the weight is elevated and lowered.

A gravity center movement part can include: an actuator installed inside the upper structure; and a weight installed on one side of the actuator and elevated and lowered by the actuator.

The wave power generation apparatus can also include a support member for keeping the wave power generation apparatus at a predetermined height from the water plane.

The support member can include at least one wire installed on a sea-bed and connected to the lower structure.

The support member can include a column fixed to and installed on the sea-bed and installed on the lower structure.

### [Description of Drawings]

FIG. 1 shows a front view of a wave power generation apparatus in accordance with the embodiment of the present invention.
FIG. 2 shows a side view of the wave power generation apparatus in accordance with the embodiment of the present invention.
FIG. 3 is a brief illustration of an inside of the wave power generation apparatus in accordance with the embodiment of the present invention.
FIG. 4 is a graph illustrating response amplitude operators (RAO) based on a
wave period of an upper structure in accordance with the embodiment of the present invention.
FIG. 5 is a graph illustrating a motion response of the upper structure in accordance with the embodiment of the present invention for an actual state of the sea.
FIG. 6 is a perspective view briefly illustrating the upper structure of the wave power generation apparatus in accordance with the embodiment of the present invention.
FIG. 7 is a brief illustration of an inside of a wave power generation apparatus in accordance with another embodiment of the present invention.
FIG. 8 is a brief illustration of an inside of a wave power generation apparatus in accordance with yet another embodiment of the present invention.
FIG. 9 is a brief illustration of an inside of a wave power generation apparatus in accordance with an unclaimed embodiment of the present invention.

### [Mode for Invention]

While there can be a variety of permutations and embodiments of the present invention, certain embodiments of the present invention will be illustrated in the drawings and described.

Hereinafter, a wave power generation apparatus in accordance with the present invention will be described with reference to the accompanying drawings. In describing the present invention with reference to the accompanying drawings, any identical or corresponding elements will be assigned with same reference numerals and will not be described redundantly.

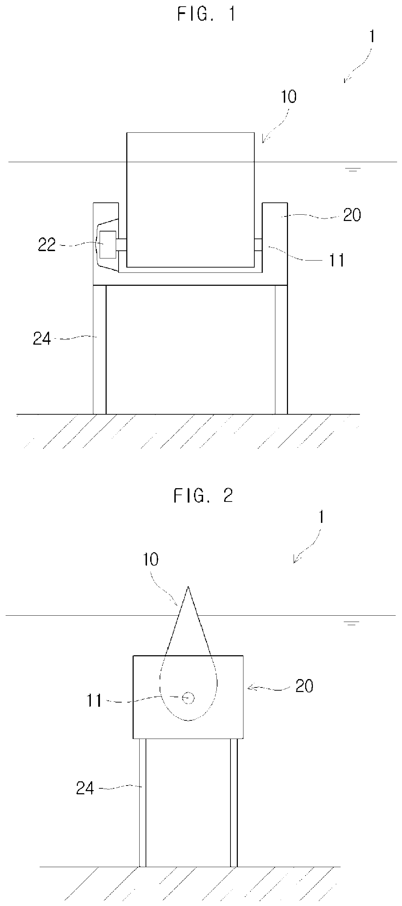

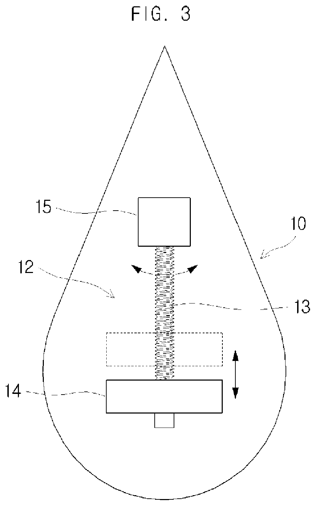

FIG. 1 shows a front view of a wave power generation apparatus in accordance with an embodiment of the present invention, and FIG. 2 shows a side view of the wave power generation apparatus in accordance with the embodiment of the present invention. FIG. 3 is a brief illustration of an inside of the wave power generation apparatus in accordance with the embodiment of the present invention.

Referring to FIGS. 1 to 3, a wave power generation apparatus 1 in accordance with the present invention can include an upper structure 10, a pivot axle 11, a gravity center movement part 12, a rotation axle 13, a weight 14, a lower structure 20, a generation part 22 and a column 24.

The wave power generation apparatus in accordance with the present invention has the upper structure 10, which is rotatably installed in the lower structure, which is installed under a water plane. Here, the water plane refers to a surface of seawater, and the lower structure 20 can be installed while being submerged in the seawater. Moreover, the upper structure 10 has either side thereof fixed by the lower structure 20 to restrict rotation in a latitudinal direction but to allow vertical rolling in a longitudinal direction.

In the present invention, the wave power generation apparatus 1 can be installed in the seas having a shallow depth of water, and thus the lower structure 20 can be fixed to the sea-bed.

Meanwhile, the wave power generation apparatus 1 can float on the water and thus can further include a support member for keeping the wave power generation apparatus 1 at a predetermined height.

Therefore, in the present invention, the wave power generation apparatus 1 can be moored at a particular height by various types of support members according to the depth of the sea in which the wave power generation apparatus 1 is installed.

For example, in the case that the upper structure 10 is positioned below the water plane, the wave power generation apparatus 1 can be moored at a particular height by installing the support member underneath the lower structure 20. Here, the support member can be constituted with the columns 24 that are fixed to and installed on the sea-bed. The columns 24 have lower parts thereof inserted and fixed to the sea-bed and have upper parts thereof coupled to one side of the lower structure 20 so as to support the lower structure 20. In the present invention, the columns24 can be formed as a fixed-type structure in the form of steel pole, pipe or truss.

Moreover, although it is described in the present invention that the wave power generation apparatus 1 has the lower structure 20 that is fixed and installed at a particular height by the columns 24 installed on the sea-bed, the present invention is not restricted to what is described in the present invention, and it is possible that the wave power generation apparatus 1 is installed in various forms depending on the state or depth of the sea in which the wave power generation apparatus 1 is installed.

For example, in the present invention, the support member can include at least one wire that is installed on the sea-bed and connected to the lower structure 20. Such a wire can be constituted with a single steel wire or with a tendon wire in which a plurality of steel wires are wound. Moreover, the wire can take various other forms, such as a chain or a metal wire formed by successively coupling loops.

In the present invention, the wave power generation apparatus 1 can have the upper structure 10 installed toward a direction of the wave in order to increase the vertical rolling with respect to the wave. That is, the upper structure 10 can have a front face part installed in a direction that is hit by the wave, and the vertical rolling is occurred in forward and backward directions by this wave.

A lateral side of the upper structure 10 is narrow in an upper part and becomes increasingly wider toward a lower part. In addition, the lateral side of the upper structure 10 becomes increasingly narrower again below the pivot axle 11 that is supported by the lower structure 20. Accordingly, the lateral side of the upper structure 10 is formed in the shape of a roly poly or a water drop, and thus the upper structure 10 can readily have the vertical rolling in the forward and backward directions by the wave and can be readily returned to its original position.

Moreover, the upper structure 10 is formed to have a low center of gravity and has a restrained up-and-down motion. For example, when buoyancy is applied to the center of gravity by the seawater, the upper structure 10 can be positioned to be lower than the center of buoyancy.

The wave power generation apparatus 1 can also include the generation part 22 that converts kinetic energy caused by rotary power generated when the upper structure 10 fluctuates back and forth into electrical energy.

The generation part 22 can be installed in any one of the upper structure 10 and the lower structure 20. For example, in the present invention, the generation part 22 can be installed on both sides of the lower structure 20, and each of driving axles thereof can be connected to an end part of the pivot axle 11 of the upper structure 10.

Although it is described in the present invention that the generation part 22 is installed in the lower structure, the location or number of the generation part 22 is not restricted to what is described herein and can variously modified. For example, the generation part 22 can be installed inside the upper structure 10. Moreover, the generation part 22 can be provided as a single unit that is installed on one side of the pivot axle 11 of the upper structure 10 or can be provided in two units that are respectively installed on either side of the pivot axle 11 of the upper structure 10. As various known technologies can be applied to the generation part 22 of the present invention, detailed description for connection structure or effect thereof will be omitted herein.

Moreover, in the present invention, the generation part 22 is connected to the pivot axle 11 of the upper structure 10 so that rotary motion can be directly transferred, and an accelerator/decelerator (not shown) can be further installed in between the pivot axle 11 of the upper structure 10 and the driving axle of the generation part 22.

The accelerator/decelerator amplifies the rotary motion of the upper structure 10 and transfers the rotary motion to the driving axle of the generation part 22, and accordingly the power generation efficiency can be further increased.

The wave power generation apparatus 1 of the present invention can include a gravity center movement part 12 that moves the center of gravity of the upper structure 10.

A gravity center movement part 12 can resonate a vertical rolling period of the upper structure 10 with a wave period, and accordingly, the upper structure 10 can roll greatly even with small-size waves.

As such, electricity can be stably produced by resonating the vertical rolling period of the upper structure 10 with the wave period. That is, in the case that the wave is calm (i.e., the wave period is short), the vertical rolling of the upper structure 10 can be increased, even with a small force of the wave, by moving the center of gravity of the upper structure 10 close to the center of buoyancy. Moreover, in the case that the wave is big (i.e., the wave period is long), the vertical rolling of the upper structure 10 can be stable, despite a big force of the wave, by moving the center of gravity of the upper structure 10 far away from the center of buoyancy.

In the present invention, a gravity center movement part 12 can include the rotation axle 13 that is installed longitudinally in the upper structure 10. Moreover, the rotation axle 13 can have the weight 14 coupled to and installed on one side thereof.

Moreover, the rotation axle 13 can have a driving part 15 installed thereon so that the rotation axle 13 can be rotated to elevate and lowere the weight the driving part 15.

The gravity center movement part 12 of the present invention can adjust the center of gravity of the upper structure 10 by elevating and lowering the weight 14.

For this, the rotation axle 13 can have a helix part formed on an external circumferential surface thereof. Moreover, the weight 14 can have a hole, into which the rotation axle 13 is inserted, formed in a center portion thereof, and the hole can have a helix part, with which the helix part of the rotation axle 13 is coupled, formed on an internal circumferential surface thereof.

Therefore, when the driving part 15 rotates the rotation axle 13, the weight 14 becomes elevated or lowered along the helix part of the rotation axle 13. Here, the upper structure 10 can be provided with a guide (not shown) that guides movement of the weight 14 and prevents rotation of the weight 14.

In one example, the driving part 15 can include a motor, and a driving axle of the motor can be coupled with an end part of the rotation axle 13.

Although the weight 14 of the present invention is installed to be elevated and lowered by the rotation of the driving part 15, the present invention is not restricted to what is described herein and can be modified in various forms.

For example, although it is described in the present invention that the driving axle of the motor, which is the driving part 15, is connected to the rotation axle 13, it is possible that the driving axle of the motor is arranged in parallel with the rotation axle 13 to transfer the driving power indirectly. For this, it is possible that a driven gear is installed on one side of the rotation axle 13 and a driving gear, which is engaged with the driven gear, is installed on an end part of the driving axle to transfer the driving power.

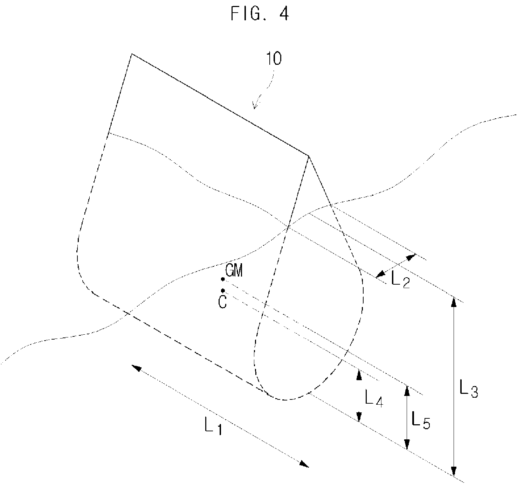

FIG. 4 is a perspective view briefly illustrating the upper structure of the wave power generation apparatus in accordance with the embodiment of the present invention.

Data of the upper structure 10 for obtaining response amplitude operators of the wave power generation apparatus 1 in accordance with the embodiment of the present invention, referring to FIG. 4 and Table 1, are as follows.

**[Table 1]**

| <Data of Upper Structure> | | |
|---|---|---|
| Item | Data | Remarks |
| Width of Front Face | 20m | |
| Length of Water Plane | 3.4m | |
| Length of Draft | 14.1m | |
| Displacement | 2036.3ton | |
| Height of Center of Gravity | 3.1m | |
| Height of Metacenter | 3.33m | |
| Radius of Inertia | 4m | |

In one example, in the upper structure 10 of the present invention, the width (L1) of the front face, to which the wave progresses, can be about 20m, and the length (L2) of the lateral side, which is positioned at the water plane, which is the height of the sea, can be about 3.4m, and the draft (L3), which is the length submerged in the water, can be about 14.1m. The displacement of this upper structure 10 can be about 2036.3 tons, and the height (L4) of the center of gravity (C) can be located at about 3.1m above the bottom.

Moreover, the upper structure 10 can have the height (L5) of the metacenter, which is the center of buoyancy, which determines the force of restitution of vertical rolling, at about 3.33m above the bottom.

The above-described upper structure 10 can vertically roll within the radius of inertia of about 4m.

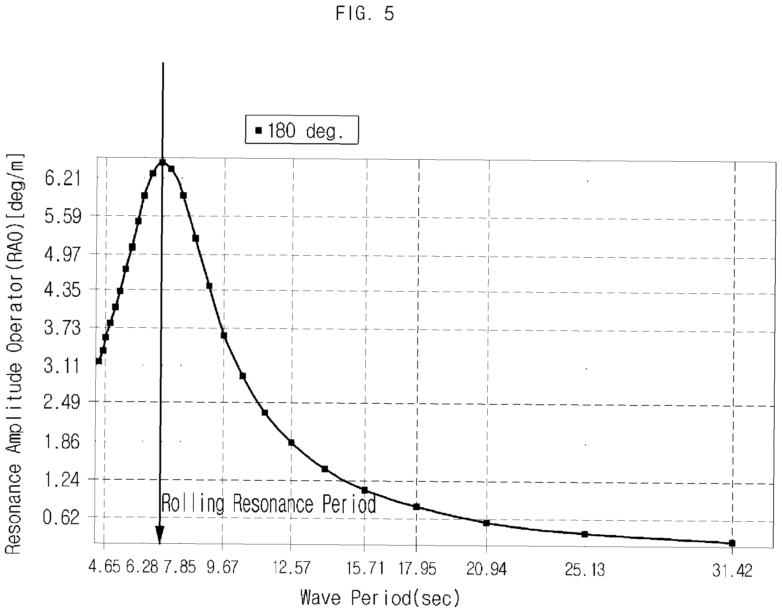

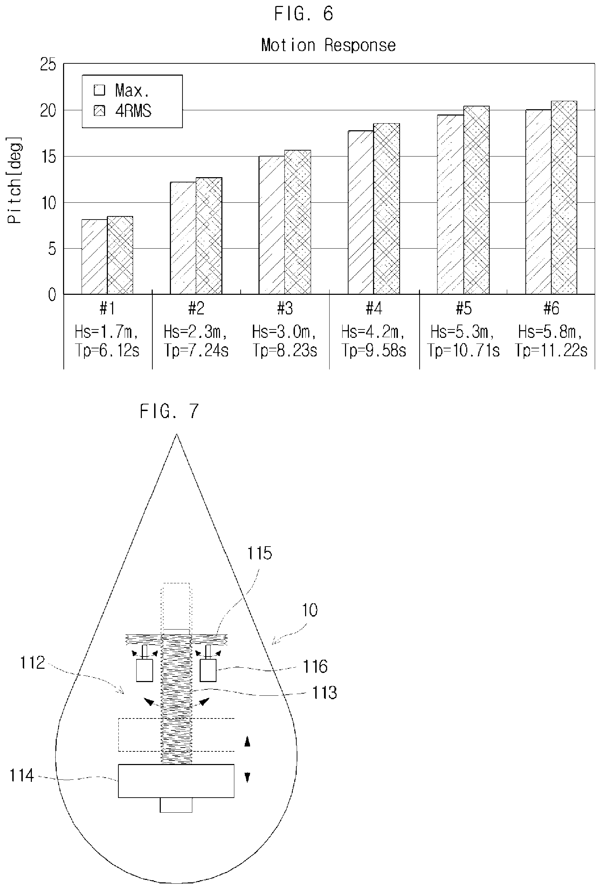

FIG. 5 is a graph illustrating response amplitude operators (RAO) based on a wave period of the upper structure 10 in accordance with the embodiment of the present invention, and FIG. 6 is a graph illustrating a motion response of the upper structure 10 in accordance with the embodiment of the present invention for an actual state of the sea.

In the embodiment of the present invention, in the case that the wave period of the sea, in which the wave power generation apparatus 1 is installed, is between 5 and 8 seconds, the period by which the upper structure 10 rolls vertically can be made to 5 to 8 seconds, which is the wave period of the sea, by adjusting the gravity center movement part 12.

In the present invention, the response amplitude operators (RAO) are values indicating angles of vertical rolling of the floating body for each wave periods, when a wave with amplitude of 1m is encountered.

Moreover, the response amplitude operators (RAO) of the upper structure 10 with respect to wave periods can be illustrated as shown in FIG. 5. Here, the x-axis indicates the wave periods, and the y-axis indicates responses of the floating body for each wave periods.

As illustrated in FIG. 6, the upper structure 10 can be made to resonate at the period of 6.5 seconds, which is the wave period, by adjusting the gravity center movement part 12. Accordingly, the upper structure 10 can vertically roll at the period of about 6.5 seconds.

Therefore, it can be inferred that the upper structure 10 has vertical rolling motions having the amplitude of about 6.5 degrees when the wave having amplitude of 1m is encountered.

It can be inferred that vertical rolling motion responses shown in FIG. 6 are obtained by referring to FIG. 5 and realizing the state of the sea corresponding to each actual period.

As illustrated in FIG. 6, the upper structure 10 has excessive vertical rolling motions between about 10 degrees and about 20 degrees, depending on the state of the sea, and excessive motion above motion response that can be directly obtained in actual wave energy can be obtained by placing a resonance point of the upper structure 10 near the wave period. Moreover, by moving the center of gravity of the upper structure 10 up and down, the vertical rolling period of the upper structure 10 can be made to match with the wave period. Accordingly, a maximum motion can be realized based on each state of the sea.

Although it is described in the present invention that the upper structure 10 is formed in the shape of a roly poly or a water drop, the present invention is not restricted to what is described herein, and the upper structure 10 can be formed in various shaped that can resonate the vertical rolling period of the upper structure 10 with the wave period of the state of the sea. For example, the upper structure 10 can be formed in the shape of a triangle, a gourd or any variety of shapes that increases the volume thereof below the water plane toward the bottom.

Moreover, the longitudinal length of the front face of the upper structure 10 that is encountered by the wave can be elongated in order to receive greater wave power, and it is also possible that the upper structure is formed in such a way that the top view of the upper structure 10 has a bent shape in forward and backward directions or an arc shape. Moreover, the longitudinal length of the upper structure 10 can be designed differently by considering structural strength or manufacture.

FIG. 7 is a brief illustration of an inside of a wave power generation apparatus 1 in accordance with another embodiment of the present invention, and a gravity center movement part 112 can include a rotation axle 113 that is vertically installed in the upper structure 10. Moreover, the rotation axle 113 can have a helix part formed on an external circumferential surface thereof. In addition, the rotation axle 113 can have a weight 114 installed on an end part thereof.

The rotation axle 113 can have a driving part 116 connected thereto. The driving part 116 can include a motor, and a turning gear 115, which is engaged with the helix part of the rotation axle 113, can be installed on a driving axle of the motor.

In the gravity center movement part 112, by operating the driving part 116, the turning gear 115 is rotated, and the rotation axle 113 engaged with the turning gear 115 is rotated. Then, due to the rotation, the rotation axle 113 moves up and down inside the upper structure 10. Here, the weight 114 installed on the end part of the rotation axle 113 moves up and down due to the upward and downward movement of the rotation axle 113, and thus the center of gravity of the upper structure 10 can be adjusted.

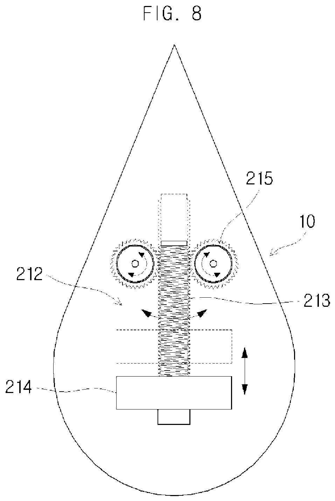

FIG. 8 is a brief illustration of an inside of a wave power generation apparatus 1 in accordance with yet another embodiment of the present invention, and a gravity center movement part 212 can include a rod 213 that is vertically installed in the upper structure 10 and has a gear part formed on one side thereof. Moreover, the rod 213 can have a weight 214 installed on the other side thereof. In addition, the rod 213 can have a turning gear 215, which is engaged with the gear part, installed in the gear part thereof. The turning gear 215 receives driving power from a motor (not shown), and the weight 214 can be elevated and lowered by moving the rod 213 by the driving power. Accordingly, the center of gravity of the upper structure can be adjusted.

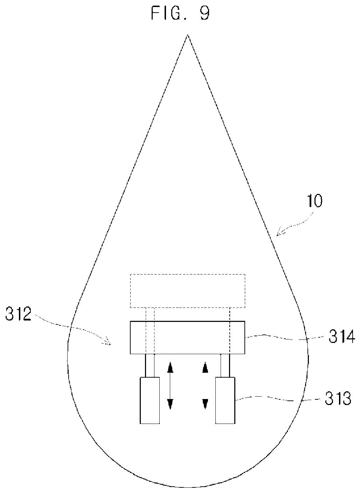

FIG. 9 is a brief illustration of an inside of a wave power generation apparatus 1 in accordance with an unclaimed embodiment of the present invention.

Referring to FIG. 9, a gravity center movement part 312 of the present embodiment can include an actuator 313 inside the upper structure 10. The actuator 313 can be provided in a single unit or in plurality and can have a weight 314 installed on one side thereof. The weight 314 is elevated and lowered by operation of the actuator 313, and thus the center of gravity of the upper structure 10 can be adjusted.

In the present embodiment, the gravity center movement part can be modified to various other forms than what are described in the above-described embodiments, and it is also possible to combine one or more of the above-described embodiments. Moreover, it is also possible to install a ballast tank inside the upper structure for the gravity center movement part and include a ballast pump that supplies or discharges ballast water by being connected with the ballast tank.

The ballast tank and the ballast pump can be additionally installed so as not to interfere with the gravity center movement part of the above-described embodiments.

Although certain embodiments of the present invention have been described, it shall be appreciated by those who are skilled in the art to which the present invention pertains that there can be various permutations and modifications of the present invention without departing from the technical ideas and scopes of the present invention that shall be defined by the claims appended below.

### [Industrial Applicability]

With the embodiments of the present invention, the vertical rolling of the upper structure can be made to resonate with the wave period, and thus the power generation efficiency can be improved by increasing the amount of rotation of the upper structure.

## Claims

1. A wave power generation apparatus comprising:
an upper structure (10) having a front face part thereof installed in a direction hit by a wave to be rolled by the wave and having an inside;
a lower structure (20) installed under a water plane to rotatably support the upper structure;
a generation part (22) installed on one of the upper structure and the lower structure and configured to convert kinetic energy generated when the upper structure rotates into electrical energy; and
a gravity center movement part (12, 112, 212) installed in the upper structure and configured to move a center of gravity of the upper structure in order to adjust a wave period and a rolling period of the upper structure,
wherein the gravity center movement part (12, 112, 212) comprises: a rotation axle (13, 113, 213) longitudinally installed in the upper structure; a weight (14, 114, 214) coupled to one side of the rotation axle so as to be elevated and lowered when the rotation axle rotates; and a driving part (15, 115, 215) configured to elevate and lower the weight by rotating the rotation axle, and
wherein the center of gravity of the upper structure is varied by moving the weight up and/or down in the upper structure.

2. The wave power generation apparatus (1) of claim 1, wherein a driving axle of the generation part (22) is connected to a pivot axle of the upper structure (10).

3. The wave power generation apparatus (1) of claim 2, further comprising an accelerator/decelerator installed in between the pivot axle of the upper structure (10) and the driving axle of the generation part (22).

4. The wave power generation apparatus (1) of claim 1, wherein the center of gravity of the upper structure (10) is positioned to be lower than a center of buoyancy of the upper structure (10).

5. The wave power generation apparatus (1) of claim 1, a lateral side of the upper structure (10) is formed in the shape of a water drop in which a width thereof is increased toward a bottom thereof and is decreased again below a pivot axle of the upper structure (10).

6. The wave power generation apparatus (1) of any one of claims 1 to 5, further comprising a support member for keeping the wave power generation apparatus (1) at a predetermined height from the water plane.

7. The wave power generation apparatus (1) of claim 6, wherein the support member comprises at least one wire installed on a sea-bed and connected to the lower structure.

8. The wave power generation apparatus (1) of claim 7, wherein the support member comprises a column fixed to and installed on the sea-bed and installed on the lower structure.

## Patentansprüche

1. Vorrichtung zur Wellenenergie-Erzeugung, die Folgendes umfasst:
eine obere Struktur (10), die einen vorderen Flächenabschnitt davon aufweist, der in einer Richtung installiert ist, die von einer Welle getroffen wird, um von der Welle überrollt zu werden und eine Innenseite aufweist;
eine untere Struktur (20), die unter einer Wasserebene installiert ist, um die obere Struktur drehbar zu stützen;
einen Erzeugungsabschnitt (22), der auf einer von der oberen Struktur und der unteren Struktur installiert und dazu konfiguriert ist, kinetische Energie, die beim Drehen der oberen Struktur erzeugt wird, in elektrische Energie umzuwandeln; und
einen Schwerpunktbewegungsabschnitt (12, 112, 212), der in der oberen Struktur installiert und dazu konfiguriert ist, einen Schwerpunkt der oberen Struktur zu bewegen, um eine Wellenperiode und eine Rollperiode der oberen Struktur anzupassen,
wobei der Schwerpunktbewegungsabschnitt (12, 112, 212) Folgendes umfasst: eine Drehachse (13, 113, 213), die längs in der oberen Struktur installiert ist; ein Gewicht (14, 114, 214), das an eine Seite der Drehachse gekoppelt ist, um angehoben und abgesenkt zu werden, wenn sich die Drehachse dreht; und einen Antriebsabschnitt (15, 115, 215), der dazu konfiguriert ist, das Gewicht durch Drehen der Drehachse anzuheben und abzusenken, und wobei der Schwerpunkt der oberen Struktur durch das Aufwärts- und/oder das Abwärtsbewegen des Gewichts in der oberen Struktur verändert wird.

2. Vorrichtung zur Wellenenergie-Erzeugung (1) nach Anspruch 1, wobei eine Antriebsachse des Erzeugungsabschnitts (22) mit einer Schwenkachse der oberen Struktur (10) verbunden ist.

3. Vorrichtung zur Wellenenergie-Erzeugung (1) nach Anspruch 2, ferner umfassend einen Beschleuniger/Verzögerer, der zwischen der Schwenkachse der oberen Struktur (10) und der Antriebsachse des Erzeugungsabschnitts (22) installiert ist.

4. Vorrichtung zur Wellenenergie-Erzeugung (1) nach Anspruch 1, wobei der Schwerpunkt der oberen Struktur (10) tiefer positioniert ist als ein Auftriebspunkt der oberen Struktur (10) .

5. Vorrichtung zur Wellenenergie-Erzeugung (1) nach Anspruch 1, wobei eine laterale Seite der oberen Struktur (10) in der Form eines Wassertropfens gebildet ist, bei dem eine Breite in Richtung eines Bodens davon zunimmt und unterhalb einer Schwenkachse der oberen Struktur (10) wieder abnimmt.

6. Vorrichtung zur Wellenenergie-Erzeugung (1) nach Anspruch 1 bis 5, ferner umfassend ein Stützelement zum Halten der Vorrichtung zur Wellenenergie-Erzeugung (1) in einer vorbestimmten Höhe über der Wasserebene.

7. Vorrichtung zur Wellenenergie-Erzeugung (1) nach Anspruch 6, wobei das Stützelement mindestens einen Draht umfasst, der auf einem Meeresboden installiert und mit der unteren Struktur verbunden ist.

8. Vorrichtung zur Wellenenergie-Erzeugung (1) nach Anspruch 7, wobei das Stützelement eine Säule umfasst, die an dem Meeresbunden befestigt und auf diesem installiert und auf der unteren Struktur installiert ist.

## Revendications

1. Appareil de production d'énergie houlomotrice comprenant :
une structure supérieure (10) ayant une partie de face avant de celle-ci installée dans une direction frappée par une vague devant être roulée par la vague et ayant un intérieur ;
une structure inférieure (20) installée sous un plan d'eau pour supporter en rotation la structure supérieure ;
une partie de production (22) installée sur l'une de la structure supérieure et de la structure inférieure et configurée pour convertir l'énergie cinétique produite lorsque la structure supérieure tourne en énergie électrique ; et
une partie de déplacement de centre de gravité (12, 112, 212) installée dans la structure supérieure et configurée pour déplacer un centre de gravité de la structure supérieure afin d'ajuster une période de vague et une période de roulement de la structure supérieure,
dans lequel la partie de déplacement de centre de gravité (12, 112, 212) comprend : un axe de rotation (13, 113, 213) installé longitudinalement dans la structure supérieure ; un poids (14, 114, 214) couplé à un côté de l'axe de rotation de façon à être élevé et abaissé lorsque l'axe de rotation tourne ; et une partie d'entraînement (15, 115, 215) configurée pour élever et abaisser le poids par rotation de l'axe de rotation, et
dans lequel le centre de gravité de la structure supérieure est modifié par le déplacement du poids vers le haut et/ou vers le bas dans la structure supérieure.

2. Appareil de production d'énergie houlomotrice (1) selon la revendication 1, dans lequel un axe d'entraînement de la partie de production (22) est connecté à un axe de pivotement de la structure supérieure (10).

3. Appareil de production d'énergie houlomotrice (1) selon la revendication 2, comprenant en outre un accélérateur/décélérateur installé entre l'axe de pivotement de la structure supérieure (10) et l'axe d'entraînement de la partie de production (22).

4. Appareil de production d'énergie houlomotrice (1) selon la revendication 1, dans lequel le centre de gravité de la structure supérieure (10) est positionné pour être plus bas qu'un centre de poussée de la structure supérieure (10).

5. Appareil de production d'énergie houlomotrice (1) selon la revendication 1, un côté latéral de la structure supérieure (10) est formé sous la forme d'une chute d'eau dans laquelle une largeur de celle-ci est augmentée vers une base de celle-ci et est de nouveau réduite sous un axe de pivotement de la structure supérieure (10).

6. Appareil de production d'énergie houlomotrice (1) selon l'une quelconque des revendications 1 à 5, comprenant en outre un élément de support pour maintenir l'appareil de production d'énergie houlomotrice (1) à une hauteur prédéterminée par rapport au plan d'eau.

7. Appareil de production d'énergie houlomotrice (1) selon la revendication 6, dans lequel l'élément de support comprend au moins un câble installé sur un lit marin et connecté à la structure inférieure.

8. Appareil de production d'énergie houlomotrice (1) selon la revendication 7, dans lequel l'élément de support comprend une colonne fixée à et installée sur le lit marin et installée sur la structure inférieure.
